(19) Europäisches Patentamt

European Patent Office

Office européen des brevets

(11) **EP 3 719 463 B1**

(12) **EUROPEAN PATENT SPECIFICATION**

(45) Date of publication and mention
of the grant of the patent:
**16.11.2022 Bulletin 2022/46**

(21) Application number: **19167298.9**

(22) Date of filing: **04.04.2019**

(51) International Patent Classification (IPC):
***G01K 7/02*** *(2021.01)*

(52) Cooperative Patent Classification (CPC):
**G01K 7/021**

(54) **HIGHLY FAILURE TOLERANT TEMPERATURE ACQUISITION FOR THERMOCOUPLE
APPLICATIONS**

HOCH FEHLERTOLERANTE TEMPERATURERFASSUNG FÜR
THERMOELEMENTANWENDUNGEN

ACQUISITION DE TEMPÉRATURE HAUTEMENT INSENSIBLE AUX DÉFAILLANCES POUR DES
APPLICATIONS DE THERMOCOUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.10.2020 Bulletin 2020/41**

(73) Proprietor: **Integrated Device Technology, Inc.
San Jose, CA 95138 (US)**

(72) Inventors:
• **KAUERT, Reinhard
01458 Medingen (DE)**

• **RIEDEL, Stefan
02699 Neschwitz (DE)**

(74) Representative: **Lippert Stachow Patentanwälte
Rechtsanwälte
Partnerschaft mbB
Krenkelstraße 3
01309 Dresden (DE)**

(56) References cited:
**EP-A1- 3 070 446      EP-A1- 3 348 977
WO-A1-2018/104017     GB-A- 2 507 092**

**Description**

The invention relates to a method for a thermo voltage acquisition from a thermocouple element and to a thermo voltage acquisition circuit.

The automotive industry employs thermocouple temperature transmitters to monitor temperatures on the exhaust system. A thermocouple element is fabricated by joining two dissimilar metals. The junction of the two dissimilar metals produces a small voltage that is related to its temperature. This is known as Seebeck effect. The Seebeck voltage (so called thermo voltage) is measured as a difference voltage across the two thermocouple element terminals and translated into a temperature signal by a measurement and acquisition system. This kind of temperature measurement is sensitive against two typical system fault effects that often occur in a field:

> 1. thermocouple sensor degrades or changes its resistance;

> 2. isolation resistance to ground potential decreases.

This system faults are detected by the measurement system whereon it usually indicates that the temperature signal is not reliable any more. Different methods for fault detection are established and are not part of this invention. So US 6,556,145 B1 describes a method how to detect a degraded thermocouple sensor that changes its resistance.

As automotive temperature measurement becomes more important for engine control there is an increasing need to provide a reliable temperature signal that is robust against the typical system faults.

US 6,556,145 B1 claims that the diagnostic signal is used to calculate a compensated temperature output signal. In terms of US 6,556,145 B1 the diagnostic signal is related to the thermocouple resistance itself but not to an isolation resistance to ground fault.

An isolation resistance fault can be caused by the mechanical construction of the sensor. Most thermocouple sensors have a characteristic to decrease its isolation resistance to ground especially at high temperatures what will result in a wrong temperature output. A low isolation resistance can also be caused by a faulty sensor system installation.

If the thermocouple sensor wires have an isolation resistance fault to ground the measured thermo voltage is changed, which leads to a wrong temperature output. This voltage change is caused by the current flowing through the isolation resistance to ground and dropping across any ohmic resistance of the sensor network connected to the measurement system. The network resistance includes contacts, sensor wires and EMC-filter components if available.

For compensating an isolation resistance to ground fault WO 2018/130349 A2 discloses a method for acquisition of failure tolerant thermo-voltage in a thermocouple sensor.

The disclosed method comprises the steps of:

- performing four different voltage measurements by measuring at two different common mode voltage levels, each at a positive and a negative current polarity,
- resulting in four different measurement values nI, pI, nII and pII,
- calculating a compensated thermo-voltage $V_{TC\_COMP}$ using nI, pI, nII and pII by a digital signal processing, whereas the compensated thermo-voltage $V_{TC\_COMP}$ is calculated as follows:

$$V_{TC\_COMP} = 2*M1 - M2,$$

whereas M1 = (nI+pI)/2, and M2 = (nII+pII) /2 and whereas the compensated thermo-voltage $V_{TC\_COMP}$ is independent from a local occurrence of an isolation resistance fault along a sensor wire of the thermocouple sensor.

However, the method according to WO 2018/130349 A2, also published as EP 3 348 977 A1, is not insensitive against ground bouncing between the sensor and chassis ground. Since the outer shield of the thermocouple element is normally connected to chassis ground, the voltage difference of this to the sensor ground adds a further source of signal deviation, which is not detectable by the method according to WO 2018/130349 A2. The ground bouncing can range between more than +/- 1V.

GB 2507092 discloses a method and circuit for measuring the electrical insulation resistance of a thermocouple, wherein the thermocouple is connected to ground during temperature measurement. Thus, the disclosed method and circuit is not insensitive against ground bouncing.

EP 3 070 446 A1 discloses a thermo wire testing circuit comprising a current source terminal for supplying a test current to a first thermo wire via a first terminal during a test mode, a current drain terminal for receiving said test current from a second thermo wire via a second terminal during said test mode, a reference resistor for generating a reference voltage, which reference resistor is arranged in the current circuit of said test current, and a processing unit coupleable to said first and second terminals and to said reference resistor, and configured to compare a voltage drop caused by said test current between the first and second terminals with said reference voltage.

WO 2018/104017 discloses an electronic circuit for driving a thermocouple element, temperature sensing device and method for observing a leakage resistance of the thermocouple element. The circuit comprises contact electrodes for connecting cold-end electrodes of the thermocouple element and a measuring circuitry that is designed to measure a thermo-voltage generated by the thermocouple element between the contact electrodes. One of the contact electrodes is connected to a supply voltage and to a ground potential of the electronic circuit over a voltage divider having resistors with pre-defined resistance values such that a common mode voltage between the contact electrode and the ground potential is in a pre-defined range, if a leakage resistance that is effective between the contact electrode and the ground potential is greater than a pre-defined threshold.

It is thus an object of the present invention to provide a method for thermo voltage acquisition from a thermocouple element and a thermo voltage acquisition circuit, for acquiring a thermo voltage from a thermocouple element that compensate isolation to ground faults and are insensitive against ground bouncing.

The above object is solved by a method for a thermo voltage acquisition from a thermocouple element, comprising:

a first measurement (A1) measuring the voltage at terminals of the thermocouple element for a first bias voltage,
a second measurement (B1) measuring the voltage at terminals of the thermocouple element for a second bias voltage,
a third measurement (A2) measuring the voltage at terminals of a probe resistor for the first bias voltage, and
a fourth measurement (B2) measuring the voltage at terminals of the probe resistor for the second bias voltage,
wherein during the first and second measurement (A1, B1) the bias voltage is applied to one terminal of the thermocouple element to set the working point of the thermocouple element to two different levels, and
wherein the probe resistor is connected in series between the bias voltage source and the terminal of the thermocouple element, and
wherein during the third and fourth measurement (A2, B2) the bias voltage is applied to the probe resistor,
and further comprising the steps of:

calculating a first difference (D1) between the first measurement (A1) and the second measurement (B1) by subtracting the second measurement (B1) from the first measurement (A1),

calculating a second difference (D2) between the third measurement (A2) and the fourth measurement (B2) by subtracting the fourth measurement (B2) from the third measurement (A2),

calculating a correction factor (CORR) by multiplying the first difference (D1) with the fraction of the third measurement (A2) to the second difference (D2), and

calculating the corrected thermo voltage of the thermocouple element by subtracting the correction factor (CORR) from the first measurement (A1).

The result of the method according to the invention is a thermo voltage acquisition from a thermocouple element, which compensates an isolation resistance to ground fault and further is insensitive to ground bouncing, particularly in the practical relevant ranges of +/- 1,5 V.

The thermocouple element is a native voltage source, which depends on the temperature. During the first and second measurement (A1, B1) the first and second bias voltage is applied to one terminal of the thermocouple element via the probe resistor. In this way, the working point of the thermocouple element is set to two different points. During the third and fourth measurement (A2, B2) the same first and second bias voltage is applied to the probe resistor alone.

The first and second differences (D1, D2) are calculated according to the following formulas:

$$D1 = A1 - B1,$$

and

$$D2 = A2 - B2.$$

afterwards the correction factor (CORR) is calculated according to:

$$CORR = D1 * A2/D2$$

and finally, the fault compensated thermocouple element voltage ($V_{TC}$) is calculated by:

$$V_{TC} = A1 - CORR.$$

In a variant of the invention the results of the first to fourth measurement (A1, B1, A2, B2) are converted from the analog domain to the digital domain before the calculation steps. Preferably, the results of the first to fourth measurements (A1, B1, A2, B2) are directly converted from the analog domain to the digital domain. Performing the calculations in the digital domain is faster and less complicated than performing calculations in the analog domain. Particularly preferred, the calculating steps are performed by a digital signal processing unit like a digital signal processor or microprocessor. Thus, in this variant the method according to the invention bases on voltage measurements and digital signal processing of the measurement results.

According to a variant of the invention the thermocouple element and probe resistor voltages of the first to fourth measurements (A1, B1, A2, B2) are filtered before being further processed, particularly before being converted from the analog domain to the digital domain. Such a filtering might be necessary to suppress any electromagnetic interferences (EMI). The inventive method does not introduce any new electromagnetic compatibility (EMC) issues and can be combined with filters to reduce electromagnetic interferences.

Pursuant to a further variant of the invention the results of the first to fourth measurements (A1, B1, A2, B2) are temporarily stored, particularly by a signal processing unit performing the calculations. Preferably the results of the first to fourth measurements (A1, B1, A2, B2) are converted from the analog domain to the digital domain directly after each measurement and the converted results are temporarily stored by the digital signal processing unit or a memory associated with the digital signal processing unit. Thus, after all measurements have been performed the digital signal processing unit performing the calculations accesses the temporarily stored measurement results.

In a variant of the invention the first bias voltage is different from the second bias voltage, preferably between 10 % and 20 % of a supply voltage of the circuit. Other difference between the first bias voltage and second bias voltage are also possible. For compensating an isolation resistance to ground fault and to be insensitive to ground bouncing the difference between the first bias voltage and the second bias voltage should be at least 5 %, preferably at least 10 %.

According to a further preferred variant of the invention the first bias voltage and the second bias voltage are buffered by the bias voltage source. By buffering the first bias voltage and the second bias voltage the same first bias voltage can be used for the first and third measurement (A1, A2) and the same second bias voltage can be used for the second and fourth measurement (B1, B2). Thereby further enhancing the compensation of an isolation to ground fault and increasing the insensitiveness to ground bouncing.

Pursuant to a variant of the invention a signal processing unit, particularly the analog-to-digital converter, is switched from the thermocouple to the probe resistor after the second measurement (B1). Thus, the switching takes place at the signal processing side and not at the measurement side, i.e. the thermocouple element.

In a particularly preferred variant, the method comprises the step of calculating a part of the resistance of the thermocouple element by multiplying the resistance of the probe resistor with the fraction of the first difference (D1) to the second difference (D2), wherein the resistance of the probe resistor is known. The calculated value can be compared to an expected resistance of the thermocouple according to the specifications of the thermocouple element. If the calculated value differs from the expected value by a certain value a warning signal can be generated.

According to a further advantageous variant the method comprises the step of calculating the isolation resistance of the thermocouple element by first calculating a third difference (D3) by subtracting the first bias voltage from the second bias voltage and afterwards multiplying the resistance of the probe resistor with the fraction of the third difference (D3) to the second difference (D2), wherein the resistance of the probe resistor is known. Thereby the method can detect a degradation of the isolation resistance of the thermocouple element over time and generate a warning signal if the isolation resistance falls below a certain value.

The above object is further solved by a thermo voltage acquisition circuit, for acquiring a thermo voltage from a thermocouple element, comprising:

a bias voltage source for providing a first bias voltage and a second bias voltage,
a probe resistor,
a signal processing unit, and
switches to connect the bias voltage source via the probe resistor to one terminal of the thermocouple element and the signal processing unit to both terminals the thermocouple element, or to connect the bias voltage source to both terminals of the probe resistor and the signal processing unit to both terminals of the probe resistor.

The signal processing unit is adapted to perform the following measurements:

a first measurement (A1) measuring the voltage at terminals of the thermocouple element for a first bias voltage,

a second measurement (B1) measuring the voltage at terminals of the thermocouple element for a second bias voltage,

a third measurement (A2) measuring the voltage at terminals of the probe resistor for the first bias voltage, and

a fourth measurement (B2) measuring the voltage at terminals of the probe resistor for the second bias voltage,

wherein during the first and second measurement (A1, B1) the bias voltage is applied to one terminal of the thermocouple element to set the working point of the thermocouple element to two different levels, and

wherein the probe resistor is connected in series between the bias voltage source and the terminal of the thermocouple element, and

wherein during the third and fourth measurement (A2, B2) the bias voltage is applied to the probe resistor,

and further performing the following calculations:

calculating a first difference (D1) between the first measurement (A1) and the second measurement (B1) by subtracting the second measurement (B1) from the first measurement (A1),

calculating a second difference (D2) between the third measurement (A2) and the fourth measurement (B2) by subtracting the fourth measurement (B2) from the third measurement (A2),

calculating a correction factor (CORR) by multiplying the first difference (D1) with the fraction of the third measurement (A2) to the second difference (D2), and

calculating the corrected thermo voltage of the thermocouple element by subtracting the correction factor (CORR) from the first measurement (A1).

The switches are e.g. controlled by the signal processing unit for performing the above-mentioned measurements with different settings and bias voltages.

In a variant of the invention the thermo voltage acquisition circuit further comprises an analog-to-digital converter prior to the signal processing unit. The analog-to-digital converter converts the above-mentioned measurement results from the analog domain to the digital domain and these digital signals are afterwards processed by the signal processing unit, particularly a digital signal processor.

According to a variant of the invention the thermo voltage acquisition circuit further comprises a filter element for filtering the thermocouple element and probe resistor voltages according to e.g. the first to fourth measurements (A1, B1, A2, B2). Preferably the filter element is a resistor-capacitance filter. Such a filter might be necessary to suppress any electromagnetic interferences (EMI). The inventive thermo voltage acquisition circuit does not introduce any new electromagnetic compatibility (EMC) issues and can be combined with filters to reduce electromagnetic interferences.

Pursuant to an advantageous variant of the invention the signal processing unit of the thermo voltage acquisition circuit comprises a memory for storing intermediate results. Thus, the results of the measurements or intermediate calculation results can be stored temporarily before performing (further) calculations.

In a particularly preferred variant of the invention the bias voltage source comprises a buffer. The bias voltage source with buffer can provide identical bias voltages at different times by buffering the bias voltages. Thus, e.g. first and third measurements (A1, A2) and the second and fourth measurements (B1, B2) can be performed with identical bias voltages, thereby reducing measurement inaccuracies due to bias voltage fluctuations.

Advantageously the thermo voltage acquisition circuit is located on the same semiconductor die or integrated in the same circuit. This increases the efficiency, processing speed and accuracy of the thermo voltage acquisition circuit. Furthermore, the required space and number of components is minimized.

Particularly the thermo voltage acquisition circuit is adapted to implement the method for a thermo voltage acquisition from a thermocouple element according to the invention. Thus, the thermo voltage acquisition circuit comprises means for implementing the method like a control unit, e.g. signal processing unit and memory for storing instructions, to execute the inventive method.

In the following the invention will be explained in detail with respect to the embodiments shown in the attached figures. It shows:

Fig. 1 a circuit diagram of a thermocouple element,

Fig. 2 a circuit diagram of a first embodiment of a thermo voltage acquisition circuit, for acquiring a thermo voltage from a thermocouple element, and

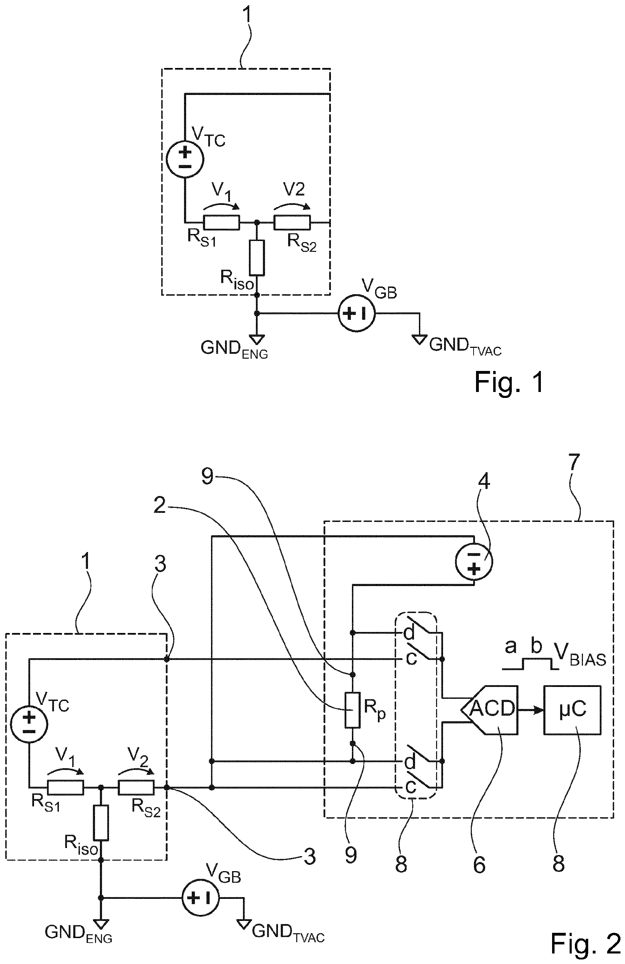

Fig. 2 a circuit diagram of a second embodiment of a thermo voltage acquisition circuit, for acquiring a thermo voltage from a thermocouple element.

Fig. 1 shows a circuit diagram of a thermocouple element 1, which can be e.g. used to monitor temperatures on the exhaust system of an automobile.

A thermocouple element 1 is for example fabricated by joining two dissimilar metals. The junction of the two dissimilar metals produces a small voltage that is related to its temperature, indicated in Fig. 1 by voltage source $V_{TC}$. This is known as Seebeck effect. The Seebeck voltage (so called thermo voltage) is measured as a difference voltage across the terminals 3 of the thermocouple element 1 and translated into a temperature signal by a thermo voltage acquisition circuit 7 (not shown in Fig. 1).

The thermocouple element 1 has a certain resistance, indicated in Fig. 1 by serial connection of resistance $R_{s1}$ and resistance $R_{s2}$. Furthermore, the isolation of the thermo couple element 1 has a certain resistance, indicated by $R_{iso}$ in Fig. 1.

This kind of temperature measurement is sensitive against two typical system fault effects that often occur in a field:

1. thermocouple sensor degrades or changes its resistance ($R_{s1}$ and $R_{s2}$);

2. isolation resistance to ground potential decreases ($R_{iso}$).

An isolation resistance $R_{iso}$ fault can be caused by the mechanical construction of the thermocouple element 1. Most thermocouple elements 1 have a characteristic to decrease its isolation resistance $R_{iso}$ to ground especially at high temperatures what will result in a wrong temperature output.

A low isolation resistance $R_{iso}$ can also be caused by a faulty sensor system installation.

If the thermocouple element 1 has an isolation resistance $R_{iso}$ fault to ground the measured thermo voltage is changed that leads to a wrong temperature output. This voltage change is caused by the current flowing through the isolation resistance $R_{iso}$ to ground.

A further a source of error is the so-called ground bouncing. Usually the outer shield of the thermocouple element 1 is connected to chassis ground $GND_{ENG}$, whereas the thermo voltage acquisition circuit 7 is connect to $GND_{TVAC}$. The resulting voltage difference is indicated in Fig. 1 by voltage source $V_{GB}$. The ground bouncing can range between more than +/- 1V.

The above faults or errors are minimized or avoided totally by the present invention.

Fig. 2 shows a circuit diagram of a first embodiment of the invention of a thermo voltage acquisition circuit 7, for acquiring a thermo voltage $V_{TC}$ from a thermocouple element 1 as shown e.g. in Fig. 1. The thermo voltage acquisition circuit 7 comprises a bias voltage source 4, a probe resistor and a signal processing unit 5.

The bias voltage source 4 can provide a first bias voltage $V_{BIAS}$ and a second bias voltage $V_{BIAS}$. The first bias voltage $V_{BIAS}$ is different from the second bias voltage $V_{BIAS}$, preferably by at least 10 % and particularly between 10 % and 20 % of a supply voltage of the thermo voltage acquisition circuit 7.

The thermo voltage acquisition circuit 7 further comprises switches 8 to connect the bias voltage source 4 via the probe resistor 2 to one terminal 3 of the thermocouple element 1 and the signal processing unit 5 to both terminals 3 of the thermocouple element 1, or to connect the bias voltage source 4 to both terminals 9 of the probe resistor 2 and the signal processing unit 5 to both terminals 9 of the probe resistor 2. The switches 8 are either identified by letter c or letter d, where switches with identical letters have the same state and switches with different letters have opposing states. Thus, if switches 8 identified by letter c are in the open state the switches identified by letter d are in the closed state and vice versa. Therefore, the signal processing unit 5 is either connected to both terminals 3 of the thermocouple element 1 or to both terminals 9 of the probe resistor 2.

The thermo voltage acquisition circuit 7 further comprises an analog-to-digital converter 6, for converting the analog signals of the thermocouple element 1 or probe resistor 2 to the digital domain. The digital signals are processed by the signal processing unit 5, which is for example a digital signal processor like a microprocessor.

The signal processing unit 5 comprises a memory for storing intermediate results. Thus, the results of the measurements (A1, B1, A2, B2) can be temporarily stored before performing calculations (D1, D2, D3, CORR), wherein the results of the calculations (D1, D2, D3, CORR) again can be temporarily stored in the memory of the signal processing unit 5.

The thermo voltage acquisition circuit 7 is located on the same semiconductor die or integrated in the same circuit.

The thermo voltage acquisition circuit 7 shown in Fig. 1 is for example adapted to implement the following methods for a thermo voltage acquisition from a thermo couple element 1. The method comprises the steps of: a first measurement (A1) measuring the voltage at the thermocouple element 1 for a first bias voltage,

a second measurement (B1) measuring the voltage at the thermocouple element 1 for a second bias voltage,

a third measurement (A2) measuring the voltage at a probe resistor 2 for the first bias voltage, and

a fourth measurement (B2) measuring the voltage at the probe resistor 2 for the second bias voltage,

wherein during the first and second measurement (A1, B1) the bias voltage is applied to one terminal 3 of the thermocouple element 1 to set the working point of the thermocouple element 1 to two different levels, and wherein the probe resistor 2 is connected in series between the bias voltage source 4 and the terminal 3 of the thermocouple element 1, and

wherein during the third and fourth measurement (A2, B2) the bias voltage is applied to the probe resistor 2,

and further comprising the steps of:

calculating a first difference (D1) between the first measurement (A1) and the second measurement (B1) by subtracting the second measurement (B1) from the first measurement (A1),

calculating a second difference (D2) between the third measurement (A2) and the fourth measurement (B2) by subtracting the fourth measurement (B2) from the third measurement (A2),

calculating a correction factor (CORR) by multiplying the first difference (D1) with the fraction of the third measurement (A2) to the second difference (D2), and

calculating the corrected thermo voltage of the thermocouple element by subtracting the correction factor (CORR) from the first measurement (A1).

The results of the first to fourth measurement (A1, B1, A2, B2) are converter from the analog domain to the digital domain before the calculating steps (D1, D2, D3, CORR) by analog-to-digital converter 6.

The thermo voltage acquisition circuit 7 can further calculate a part of the resistance $R_{s2}$ of the thermocouple element 1 by multiplying the resistance $R_p$ of the probe resistor 2 with the fraction of the first difference (D1) to the second difference (D2), wherein the resistance $R_p$ of the probe resistor 2 is known.

Furthermore, the isolation resistance $R_{ISO}$ of the thermocouple element 1 can be calculated by first calculating a third difference (D3) by subtracting the first bias voltage from the second bias voltage and afterwards multiplying the resistance $R_p$ of the probe resistor 2 with the fraction of the third difference (D3) to the second difference (D2), wherein the resistance $R_p$ of the probe resistor 2 is known.

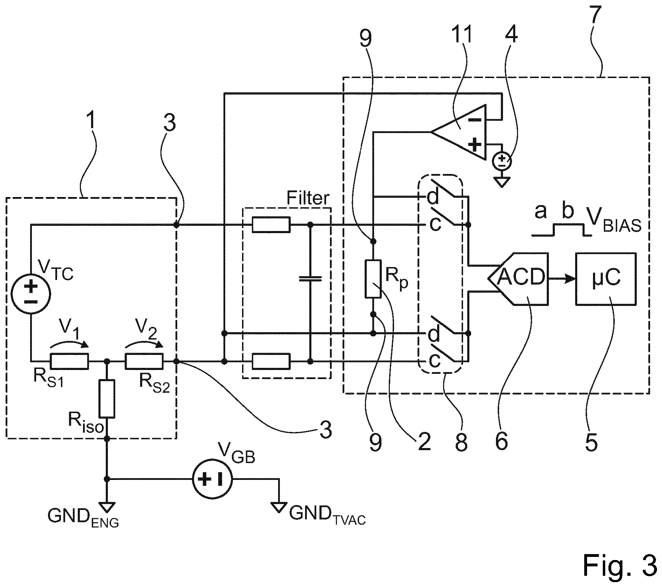

Fig. 3 shows a circuit diagram of a second embodiment of a thermo voltage acquisition circuit 7, for acquiring a thermo voltage $V_{TC}$ from a thermocouple element 1.

The second embodiment shown in Fig. 3 differs from the first embodiment shown in Fig. 2 by a filter element 10 for filtering the thermocouple element voltages $V_{TC}$ and probe resistor 2 voltages. In fig. 3 the filter element 10 is a resistor-capacitance filter. Thus, the thermocouple element voltages $V_{TC}$ and probe resistor 2 voltages of the first to fourth measurements (A1, B1, A2, B2) are filtered before being converted from the analog domain to the digital domain and thus before being further processed.

The second embodiment of Fig. 3 further differs from the first embodiment of Fig. 2 in that the bias voltage source 4 comprises a buffer 11 for buffering the first bias voltage $V_{BIAS}$ and second bias voltage $V_{BIAS}$. This increases the accuracy because for the first and third measurement (A1, A2) respectively the second and fourth measurement (B1, B2) identical bias voltages $V_{BIAS}$ can be used.

**List of reference numerals**

| 1 | thermocouple element |
|---|---|
| 2 | probe resistor |
| 3 | terminal of thermocouple element |
| 4 | bias voltage source |
| 5 | signal processing unit |
| 6 | analog-to-digital converter |
| 7 | thermo voltage acquisition circuit |
| 8 | switches |
| 9 | terminal of probe resistor |
| 10 | filter element |
| 11 | buffer bias voltage source |
| $V_{TC}$ | voltage thermocouple element |
| $R_{s1}$ | resistance thermocouple element part one |
| $R_{s2}$ | resistance thermocouple element part two |
| $R_{iso}$ | isolation resistance |
| $GND_{ENG}$ | ground engine |
| $GND_{TVAC}$ | ground thermo voltage acquisition circuit |

**Claims**

1.  Method for a thermo voltage acquisition from a thermocouple element (1), comprising:

    a first measurement (A1) measuring the voltage (VTC) at terminals (3) of the thermocouple element (1) for a first bias voltage (VBIAS),
    a second measurement (B1) measuring the voltage (VTC) at terminals (3) of the thermocouple element (1) for a second bias voltage (VBIAS),
    a third measurement (A2) measuring the voltage at terminals (9) of a probe resistor (2) for the first bias voltage (VBIAS), and
    a fourth measurement (B2) measuring the voltage at terminals (9) of the probe resistor (2) for the second bias voltage (VBIAS),
    wherein during the first and second measurement (A1, B1) the bias voltage (VBIAS) is applied to one terminal (3) of the thermocouple element (1) to set the working point of the thermocouple element (1) to two different levels, and wherein the probe resistor (2) is connected in series between the bias voltage source (4) and the terminal (3) of the thermocouple element (1), and wherein during the third and fourth measurement (A2, B2) the bias voltage (VBIAS) is applied to the probe resistor (2),
    and further comprising the steps of:

    calculating a first difference (D1) between the first measurement (A1) and the second measurement (B1) by subtracting the second measurement (B1) from the first measurement (A1),
    calculating a second difference (D2) between the third measurement (A2) and the fourth measurement (B2) by subtracting the fourth measurement (B2) from the third measurement (A2),
    calculating a correction factor (CORR) by multiplying the first difference (D1) with the fraction of the third measurement (A2) to the second difference (D2), and
    calculating the corrected thermo voltage (VTC) of the thermocouple element (1) by subtracting the correction factor (CORR) from the first measurement (A1).

**2.** Method according to claim 1,
wherein the results of the first to fourth measurement (A1, B1, A2, B2) are converted from the analog domain to the digital domain before the calculating steps (D1, D2, CORR).

**3.** Method according to claim 1 or claim 2,
wherein the thermocouple element (1) and probe resistor (2) voltages of the first to fourth measurements (A1, B1, A2, B2) are filtered before being further processed and/or before being converted from the analog domain to the digital domain.

**4.** Method according to any of claims 1 to 3,
wherein the results of the first to fourth measurements (A1, B1, A2, B2) are temporarily stored, preferably by a signal processing unit (5) performing the calculations.

**5.** Method according to any of claims 1 to 4,
wherein the first bias voltage (VBIAS) is different from the second bias voltage (VBIAS), preferably between 10% and 20% of a supply voltage of the circuit (7) .

**6.** Method according to any of claims 1 to 5,
wherein the first bias voltage (VBIAS) and the second bias voltage (VBIAS) are buffered by the bias voltage source (4).

**7.** Method according to any of claims 1 to 6,
wherein a signal processing unit (5), particularly the analog-to-digital converter (6), is switched from the thermocouple element (1) to the probe resistor (2) after the second measurement (B1).

**8.** Method according to any of claims 1 to 7,
further calculating a part of the resistance (Rs2) of the thermocouple element (1) by multiplying the resistance (RP) of the probe resistor (2) with the fraction of the first difference (D1) to the second difference (D2), wherein the resistance (RP) of the probe resistor (2) is known.

**9.** Method according to any of claims 1 to 8,
further calculating the isolation resistance (Riso) of the thermocouple element (1) by first calculating a third difference (D3) by subtracting the first bias voltage (VBIAS) from the second bias voltage (VBIAS) and afterwards multiplying the resistance (RP) of the probe resistor (2) with the fraction of the third difference (D3) to the second difference (D2), wherein the resistance (RP) of the probe resistor (2) is known.

**10.** Thermo voltage acquisition circuit (7), for acquiring a thermo voltage (VTC) from a thermocouple element (1), comprising:

a bias voltage source (4) for providing a first bias voltage (VBIAS) and a second bias voltage (VBIAS),
a probe resistor (2),
a signal processing unit (5), and
switches (8) to connect the bias voltage source (4) via the probe resistor (2) to one terminal (3) of the thermocouple element (1) and the signal processing unit (5) to both terminals (3) of the thermocouple element (1), or to connect the bias voltage source (4) to both terminals (9) of the probe resistor (2) and the signal processing unit (5) to both terminals (9) of the probe resistor (2), wherein the thermo voltage acquisition circuit (7) is adapted to implement the methods according to any of claims 1 to 9.

**11.** Thermo voltage acquisition circuit (7) according to claim 10,
further comprising an analog-to-digital converter (6) prior to the signal processing unit (5).

**12.** Thermo voltage acquisition circuit (7) according to claim 10 or claim 11,
further comprising a filter element (10) for filtering the thermocouple element voltages (VTC) and probe resistor (2) voltages, particularly a resistor-capacitance filter.

**13.** Thermo voltage acquisition circuit (7) according to any of claims 10 to 12,
wherein the signal processing unit (5) comprises a memory for storing intermediate results.

**14.** Thermo voltage acquisition circuit (7) according to any of claims 10 to 13,
wherein the bias voltage source (4) comprises a buffer (11).

**Patentansprüche**

**1.** Verfahren zur Erfassung der Thermospannung eines Thermoelementes (1), umfassend:

eine erste Messung (A1), die die Spannung (VTC) an den Klemmen (3) des Thermoelementes (1) für eine erste Vorspannung (VBIAS) misst,
eine zweite Messung (B1), die die Spannung (VTC) an den Klemmen (3) des Thermoelementes (1) für eine zweite Vorspannung (VBIAS) misst,
eine dritte Messung (A2), die die Spannung an den Klemmen (9) eines Prüfwiderstands (2) für die erste Vorspannung (VBIAS) misst, und

eine vierte Messung (B2), die die Spannung an den Klemmen (9) des Prüfwiderstands (2) für eine zweite Vorspannung (VBIAS) misst, wobei während der ersten und zweiten Messung (A1, B1) die Vorspannung (VBIAS) an eine Klemme (3) des Thermoelementes (1) angelegt wird, um den Arbeitspunkt des Thermoelementes (1) auf zwei verschiedene Niveaus einzustellen, und wobei der Prüfwiderstand (2) in Reihe zwischen der Vorspannungsquelle (4) und der Klemme (3) des Thermoelementes (1) geschaltet ist, und wobei während der dritten und vierten Messung (A2, B2) die Vorspannung (VBIAS) an den Prüfwiderstand (2) angelegt wird, und ferner die folgenden Schritte umfasst:

Berechnen einer ersten Differenz (D1) zwischen der ersten Messung (A1) und der zweiten Messung (B1) durch Subtraktion der zweiten Messung (B1) von der ersten Messung (A1),
Berechnen einer zweiten Differenz (D2) zwischen der dritten Messung (A2) und der vierten Messung (B2) durch Subtraktion der vierten Messung (B2) von der dritten Messung (A2),
Berechnen eines Korrekturfaktors (CORR) durch Multiplizieren der ersten Differenz (D1) mit dem Bruchteil der dritten Messung (A2) zur zweiten Differenz (D2), und
Berechnen der korrigierten Thermospannung (VTC) des Thermoelementes (1) durch Subtrahieren des Korrekturfaktors (CORR) von der ersten Messung (A1).

2. Verfahren nach Anspruch 1, wobei die Ergebnisse der ersten bis vierten Messung (A1, B1, A2, B2) vor den Berechnungsschritten (D1, D2, CORR) vom analogen Bereich in den digitalen Bereich umgewandelt werden.

3. Verfahren nach Anspruch 1 oder Anspruch 2, wobei die Spannungen des Thermoelementes (1) und des Prüfwiderstands (2) der ersten bis vierten Messung (A1, B1, A2, B2) gefiltert werden, bevor sie weiterverarbeitet werden und/oder bevor sie vom analogen Bereich in den digitalen Bereich umgewandelt werden.

4. Verfahren nach einem der Ansprüche 1 bis 3, wobei die Ergebnisse der ersten bis vierten Messung (A1, B1, A2, B2) zwischengespeichert werden, bevorzugt von einer Signalverarbeitungseinheit (5), die die Berechnungen durchführt.

5. Verfahren nach einem der Ansprüche 1 bis 4, wobei sich die erste Vorspannung (VBIAS) von der zweiten Vorspannung (VBIAS) unterscheidet, bevorzugt zwischen 10 % und 20 % einer Versorgungsspannung der Schaltung (7).

6. Verfahren nach einem der Ansprüche 1 bis 5, wobei die erste Vorspannung (VBIAS) und die zweite Vorspannung (VBIAS) durch die Vorspannungsquelle (4) gepuffert werden.

7. Verfahren nach einem der Ansprüche 1 bis 6, wobei eine Signalverarbeitungseinheit (5), insbesondere der Analog-Digital-Umsetzer (6), nach der zweiten Messung (B1) von dem Thermoelement (1) auf den Prüfwiderstand (2) umgeschaltet wird.

8. Verfahren nach einem der Ansprüche 1 bis 7, ferner Berechnen eines Teils des Widerstands (Rs2) des Thermoelementes (1) durch Multiplizieren des Widerstands (RP) des Prüfwiderstands (2) mit dem Bruchteil der ersten Differenz (D1) zur zweiten Differenz (D2), wobei der Widerstand (RP) des Prüfwiderstands (2) bekannt ist.

9. Verfahren nach einem der Ansprüche 1 bis 8, ferner Berechnen des Isolationswiderstands (Riso) des Thermoelementes (1) durch erstes Berechnen einer dritten Differenz (D3) durch Subtraktion der ersten Vorspannung (VBIAS) von der zweiten Vorspannung (VBIAS) und anschließend Multiplizieren des Widerstands (RP) des Prüfwiderstands (2) mit dem Bruchteil der dritten Differenz (D3) zur zweiten Differenz (D2), wobei der Widerstand (RP) des Prüfwiderstands (2) bekannt ist.

10. Thermospannungserfassungsschaltung (7) zum Erfassen einer Thermospannung (VTC) von einem Thermoelement (1), umfassend:

eine Vorspannungsquelle (4) zum Bereitstellen einer ersten Vorspannung (VBIAS) und einer zweiten Vorspannung (VBIAS), einen Prüfwiderstand (2),
eine Signalverarbeitungseinheit (5), und
Schalter (8), um die Vorspannungsquelle (4) über den Prüfwiderstand (2) mit einer Klemme (3) des Thermoelementes (1) und die Signalverarbeitungseinheit (5) mit beiden Klemmen (3) des Thermoelementes (1) zu verbinden, oder um die Vorspannungsquelle (4) mit beiden Klemmen (9) des Prüfwiderstands (2) und die Signalverarbeitungseinheit (5) mit beiden Klemmen (9) des Prüfwiderstands (2) zu verbinden, wobei die Thermospannungserfassungsschaltung (7) angepasst ist, um die Verfahren nach einem der Ansprüche 1 bis 9 zu implementieren.

11. Thermospannungserfassungsschaltung (7) nach Anspruch 10,

ferner umfassend einen Analog-Digital-Umsetzer (6) vor der Signalverarbeitungseinheit (5).

12. Thermospannungserfassungsschaltung (7) nach Anspruch 10 oder Anspruch 11,
ferner umfassend ein Filterelement (10) zum Filtern der Thermoelementspannungen (VTC) und der Spannungen des Prüfwiderstands (2), insbesondere ein Widerstandskapazitäts filter.

13. Thermospannungserfassungsschaltung (7) nach einem der Ansprüche 10 bis 12,
wobei die Signalverarbeitungseinheit (5) einen Speicher zum Speichern von Zwischenergebnissen umfasst.

14. Thermospannungserfassungsschaltung (7) nach einem der Ansprüche 10 bis 13,
wobei die Vorspannungsquelle (4) einen Puffer (11) umfasst.

## Revendications

1. Procédé d'acquisition d'une tension thermoélectrique à partir d'un élément thermocouple (1), comprenant :

une première mesure (A1) mesurant la tension (VTC) aux bornes (3) de l'élément thermocouple (1) pour une première tension de polarisation (VBIAS),
une deuxième mesure (B1) mesurant la tension (VTC) aux bornes (3) de l'élément thermocouple (1) pour une seconde tension de polarisation (VBIAS),
une troisième mesure (A2) mesurant la tension aux bornes (9) d'une résistance de sonde (2) pour la première tension de polarisation (VBIAS), et
une quatrième mesure (B2) mesurant la tension aux bornes (9) de la résistance de sonde (2) pour la seconde tension de polarisation (VBIAS),
où, pendant les première et deuxième mesures (A1, B1), la tension de polarisation (VBIAS) est appliquée à une borne (3) de l'élément thermocouple (1) pour régler le point de fonctionnement de l'élément thermocouple (1) à deux niveaux différents, et où la résistance de sonde (2) est connectée en série entre la source de tension de polarisation (4) et la borne (3) de l'élément thermocouple (1), et
où, pendant la troisième mesure et la quatrième mesure (A2, B2), la tension de polarisation (VBIAS) est appliquée à la résistance de sonde (2),
et le procédé comprenant en outre les étapes suivantes :

calculer une première différence (D1) entre la première mesure (A1) et la deuxième mesure (B1) en soustrayant la deuxième mesure (B1) de la première mesure (A1),
calculer une deuxième différence (D2) entre la troisième mesure (A2) et la quatrième mesure (B2) en soustrayant la quatrième mesure (B2) de la troisième mesure (A2),
calculer un facteur de correction (CORR) en multipliant la première différence (D1) par la fraction de la troisième mesure (A2) relativement à la deuxième différence (D2), et
calculer la tension thermoélectrique corrigée (VTC) de l'élément thermocouple (1) en soustrayant le facteur de correction (CORR) de la première mesure (A1).

2. Procédé selon la revendication 1,
dans lequel les résultats de la première mesure à la quatrième mesure (A1, B1, A2, B2) sont convertis du domaine analogique au domaine numérique avant les étapes de calcul (D1, D2, CORR).

3. Procédé selon la revendication 1 ou la revendication 2,
dans lequel les tensions de l'élément thermocouple (1) et de la résistance de sonde (2) des première à quatrième mesures (A1, B1, A2, B2) sont filtrées avant d'être traitées ultérieurement et/ou avant d'être converties du domaine analogique au domaine numérique.

4. Procédé selon l'une quelconque des revendications 1 à 3,
dans lequel les résultats des première à quatrième mesures (A1, B1, A2, B2) sont stockés temporairement, de préférence par une unité de traitement de signal (5) effectuant les calculs.

5. Procédé selon l'une quelconque des revendications 1 à 4,
dans lequel la première tension de polarisation (VBIAS) est différente de la seconde tension de polarisation (VBIAS), de préférence entre 10 % et 20 % d'une tension d'alimentation du circuit (7).

6. Procédé selon l'une quelconque des revendications 1 à 5,
dans lequel la première tension de polarisation (VBIAS) et la seconde tension de polarisation (VBIAS) sont placées dans un tampon par la source de tension de polarisation (4).

7. Procédé selon l'une quelconque des revendications 1 à 6,

dans lequel une unité de traitement de signal (5), notamment le convertisseur analogique-numérique (6), est commutée de l'élément thermocouple (1) à la résistance de sonde (2) après la deuxième mesure (B1).

8. Procédé selon l'une quelconque des revendications 1 à 7,
le procédé calculant en outre une partie de la résistance (Rs2) de l'élément thermocouple (1) en multipliant la résistance (RP) de la résistance de sonde (2) par la fraction de la première différence (D1) par rapport à la deuxième différence (D2), où la résistance (RP) de la résistance de sonde (2) est connue.

9. Procédé selon l'une quelconque des revendications 1 à 8,
le procédé calculant en outre la résistance d'isolation (Riso) de l'élément thermocouple (1) en calculant d'abord une troisième différence (D3) en soustrayant la première tension de polarisation (VBIAS) de la seconde tension de polarisation (VBIAS) et en multipliant ensuite la résistance (RP) de la résistance de sonde (2) par la fraction de la troisième différence (D3) par rapport à la deuxième différence (D2), où la résistance (RP) de la résistance de sonde (2) est connue.

10. Circuit d'acquisition de tension thermoélectrique (7), pour acquérir une tension thermoélectrique (VTC) à partir d'un élément thermocouple (1), le circuit comprenant :

une source de tension de polarisation (4) pour fournir une première tension de polarisation (VBIAS) et une seconde tension de polarisation (VBIAS),
une résistance de sonde (2),
une unité de traitement de signal (5), et
des commutateurs (8) pour connecter la source de tension de polarisation (4) par l'intermédiaire de la résistance de sonde (2) à une borne (3) de l'élément de thermocouple (1) et l'unité de traitement de signal (5) aux deux bornes (3) de l'élément de thermocouple (1), ou pour connecter la source de tension de polarisation (4) aux deux bornes (9) de la résistance de sonde (2) et l'unité de traitement de signal (5) aux deux bornes (9) de la résistance de sonde (2),
où le circuit d'acquisition de tension thermoélectrique (7) est adapté pour mettre en œuvre les procédés selon l'une quelconque des revendications 1 à 9.

11. Circuit d'acquisition de tension thermoélectrique (7) selon la revendication 10,
comprenant en outre un convertisseur analogique-numérique (6) en amont de l'unité de traitement de signal (5).

12. Circuit d'acquisition de tension thermoélectrique (7) selon la revendication 10 ou la revendication 11, comprenant en outre un élément de filtrage (10) pour filtrer les tensions de l'élément thermocouple (VTC) et les tensions de la résistance de sonde (2), en particulier un filtre résistance-capacité.

13. Circuit d'acquisition de tension thermoélectrique (7) selon l'une quelconque des revendications 10 à 12, dans lequel l'unité de traitement de signal (5) comprend une mémoire pour stocker des résultats intermédiaires.

14. Circuit d'acquisition de tension thermoélectrique (7) selon l'une quelconque des revendications 10 à 13, dans lequel la source de tension de polarisation (4) comprend un tampon (11).

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6556145 B1
- WO 2018130349 A2
- EP 3348977 A1
- GB 2507092 A
- EP 3070446 A1
- WO 2018104017 A